# EUROPÄISCHE PATENTSCHRIFT

(11) **EP 0 414 639 B1**
(45) Veröffentlichungstag und Bekanntmachung des Hinweises auf die Patenterteilung: **10.11.1993**
(21) Anmeldenummer: 90810612.3
(22) Anmeldetag: 15.08.1990
(51) Int. Cl.: B60R 13/08

(54) **Mittels Verbrennungsmotor angetriebenes Fahrzeug**
Vehicle powered by an internal combustion engine
Véhicule entraîné par un moteur à combustion interne

(30) Priorität: 25.08.1989 CH 3091/89
(43) Veröffentlichungstag der Anmeldung: 27.02.1991
(73) Patentinhaber: Mahler, Willy, CH-8912 Obfelden (CH)
(72) Erfinder: Mahler, Willy, CH-8912 Obfelden (CH)
(74) Vertreter: OK pat AG

(56) Entgegenhaltungen:
- EP-A- 0 074 941
- DE-A- 2 713 383
- DE-A- 3 804 795
- FR-A- 2 087 737
- FR-A- 2 318 050

## Beschreibung

Die Erfindung betrifft ein zwei- oder mehrachsiges, mittels Verbrennungsmotor angetriebenes Fahrzeug, mit einer schalldämmenden, belüfteten Umhüllung von Motor und Getriebe.

Ein seit jeher bei Motorfahrzeugen bestehendes Problem, das sich aber zunehmend verschärft, ist der vom Motor und auch vom Getriebe und den übrigen Kraftübertragungsorganen erzeugte Lärm. Vor allem bei Nutzfahrzeugen und ganz besonders bei speziellen, mit Arbeitsmaschinen ausgerüsteten sogenannten Kommunalfahrzeugen wie Strassenkehr-, Schneeräumungs- oder Kehricht-Fahrzeugen macht sich der Fahrzeuglärm störend bemerkbar, da diese sich oft bei langsamer Fahrt, d.h. während längerer Zeit und zudem in den frühen Morgenstunden in Wohnquartieren aufhalten.

Den beim Fahrbetrieb entstehenden Lärm an der Quelle zu vermeiden ("leise" Bauart von Motor und Getriebe) ist nur bedingt möglich, und einer vollständigen Umschliessung des Antriebsaggregates zwecks Lärmdämmung steht die notwendige Wärmeableitung sowie die Luftzufuhr und die Wegfuhr der Verbrennungsgase entgegen. So wird es bei herkömmlicher Fahrzeug-Bauart und mit bekannten Massnahmen immer schwieriger, die sich ständig verschärfenden behördlichen Vorschriften bezüglich der Lärmgrenzwerte einzuhalten.

Bei einem bekannten Fahrzeug der eingangs genannten Art (DE-A-26 32 167 = FR-A-2 318 050) ist der Motor mit dem Getriebe im Bereich der Vorderachse auf einem (dort nicht zeichnerisch dargestellten) Fahrgestell gelagert; vom Getriebe verläuft eine Antriebswelle zur Hinterachse. Zwecks Reduzierung des Geräuschpegels sind Motor und Getriebe von einem Kanal umgeben, durch den der Kühlluftstrom für den Motor geleitet wird, und an jedem Ende des Kanals ist eine Dämpfungseinrichtung vorgesehen. Die schalldämmende Umhüllung ist somit zusätzlich zum konventionellen Fahrgestell vorhanden und hat keinerlei tragende Funktion. Bei einer weiteren bekannten Anordnung (DE-A-27 13 383) sind Motor, Getriebe usw. einzeln von Kapseln umgeben, die in sich selbst als tragendes Bauteil ausgebildet und an einem Fahrgestellrahmen abgestützt sind. Die schalldämmenden Kapseln sind also wiederum zusätzlich zum normalen Fahrgestell vorhanden. Ausserdem kann bei einer vollständigen Kapselung eine ausreichende Kühlung kaum gewährleistet werden.

Mit der vorliegenden Erfindung soll die Lärmemission solcher Fahrzeuge auf neuartige Weise entscheidend vermindert werden, ohne dass die Kühlung und die Luftversorgung des Motors beeinträchtigt werden. Diese Aufgabe wird erfindungsgemäss dadurch gelöst, dass die erwähnte schalldämmende Umhüllung durch einen selbsttragenden, längsdurchlüfteten Tunnel gebildet ist, welcher den Motor und die Kraftübertragungsorgane aufnimmt und als Bestandteil des Fahrgestells eine lastaufnehmende Verbindung zwischen mindestens einer vorderen und einer hinteren Fahrzeugachse bildet, wobei der Tunnel auf mindestens einem Teil seiner Wandung eine schalldämmende Beschichtung aufweist.

Mit dieser neuartigen Fahrzeugkonstruktion gelingt es, die Lärmemission drastisch zu unterdrücken. Der Tunnel ist hier nicht ein weiteres Konstruktionsteil, welches zusätzlich zum Fahrgestell vorhanden ist, sondern er erfüllt eine Doppelfunktion als Schalldämmung und zugleich Lastaufnahme. Da der Tunnel selbst tragender Bestandteil des Fahrzeug-Chassis ist, muss er mit relativ massiven Wänden gebaut sein, wodurch für eine wirksame Geräuschdämmung gesorgt ist. An den relativ weit vom Motor und voneinander entfernten Tunnelöffnungen im Bereich von Vorder- und Hinterachse treten die Schallwellen ebenfalls bereits stark gedämpft aus, da sie infolge mehrfacher Reflexion an der schalldämmenden Beschichtung im Tunnelinnern in erheblichem Masse absorbiert werden. Andererseits sorgt aber die mit der Längsbelüftung einhergehende Zwangsströmung der Luft durch den Tunnel für eine intensive Kühlung der Aggregate und "Absaugung" der Abgase.

Zweckmässige und vorteilhafte weitere Ausgestaltungen des erfindungsgemässen Fahrzeugs sind in den abhängigen Ansprüchen 2 bis 12 angegeben. Ausführungsbeispiele der Erfindung werden nachstehend in Verbindung mit der Zeichnung näher erläutert. Es zeigen:

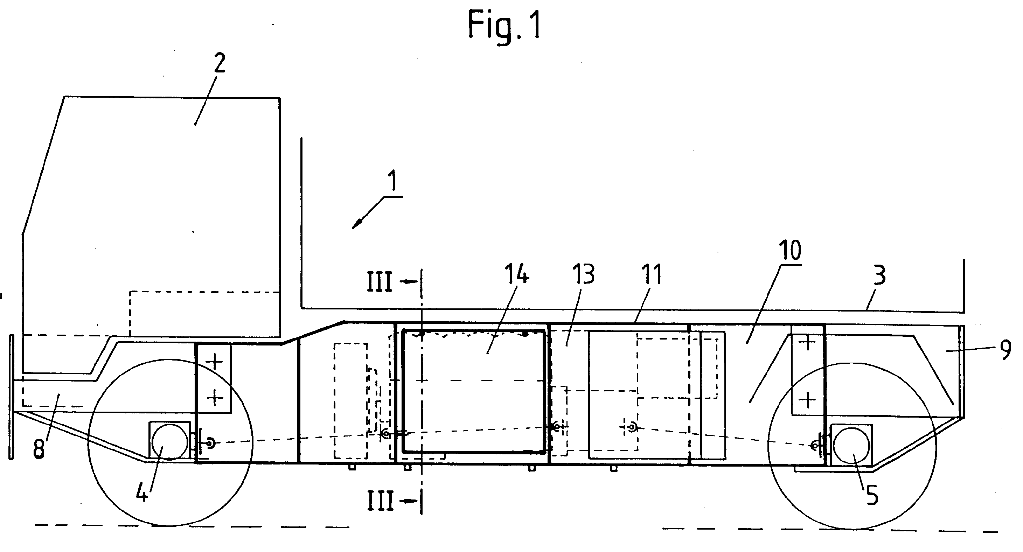

- Fig. 1: eine vereinfachte Seitenansicht des Fahrzeugs,

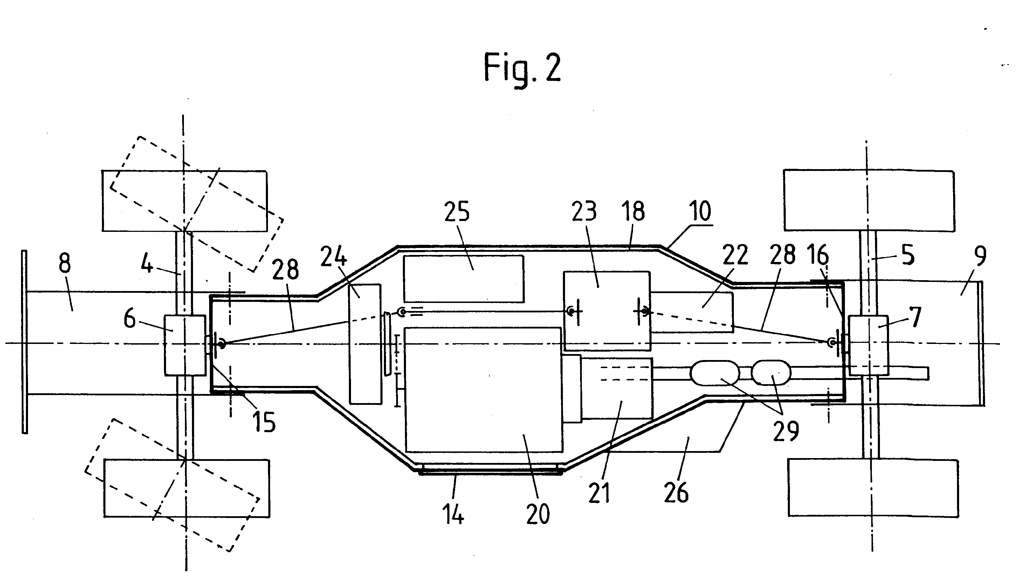

- Fig. 2: einen schematischen Horizontalschnitt auf der Höhe des Tunnels, und
- Fig. 3: einen Vertiakalschnitt in grösserem Massstab durch den Tunnel entlang der Linie III - III in Fig. 1.

Beim schematisch dargestellten Fahrzeug 1 handelt es sich um ein Nutzfahrzeug mit Fahrerkabine 2 und Aufbau (Ladefläche) 3, wobei die Vorderachse 4 und die Hinterachse 5 je mit einem Differential 6 bzw. 7 ausgerüstet sind. Das tragende, lastaufnehmende Element des Fahrgestells, welches (anstelle eines Fahrgestellrahmens) Vorderachse und Hinterachse miteinander verbindet, ist ein selbsttragend ausgebildeter, in Fahrzeug-Längsrichtung angeordneter Tunnel 10. Der mit steifen Wänden und vorzugsweise mit rechteckigem Querschnitt ausgeführte Tunnel 10 ist am vorderen Ende 15 und am hinteren Ende 16 offen und somit längsdurchlüftet. Mit dem vorderen Ende 15 ist ein Achsträger 8 und mit dem hinteren Tunnelende 16 ein Achsträger 9 lösbar verbunden. Die auf den Achsen 4 bzw. 5 über die Federung (nicht dargestellt) aufliegenden Achsträger 8 bzw. 9 sind auswechselbar, wodurch eine Achs-Adaptation am Tunnel möglich ist, d.h. es können zwei- oder mehrachsige Fahrzeuge, solche mit Doppelachsen, Zweirad- oder Mehrrad-Antrieb usw. gebaut werden.

Im Innern des Tunnels 10, welcher zweckmässigerweise in einem mittleren Bereich erweitert ist, befinden sich der Verbrennungsmotor 20, beispielsweise ein Sechszylinder-Dieselmotor, sowie die Kraftübertragungsorgane; letztere weisen beim vorliegenden Beispiel eine am Motor 20 angeflanschte bzw. von diesem angetriebene hydrostatische Pumpe 21, einen von der Pumpe 21 betriebenen Hydraulikmotor 22, ein Getriebe 23 (z.B. Lastschalt-, Synchron- oder automatisches Getriebe) und die zur Vorderachse 4 und zur Hinterachse 5 führenden Kardanwellen 28 auf. Das Getriebe 23 ist von der Kabine 2 aus fernbetätigt, vorzugsweise derart, dass kein bewegliches Gestänge oder dergleichen durch die Tunnelwandung hindurch geführt werden muss. Der Brennstofftank 25 ist zweckmässigerweise ebenfalls im Innern des Tunnels angeordnet, während der Oeltank 26 an der Aussenseite angebracht sein kann. Die vom Motor 20 ausgehende Auspuffanlage 29 mit Katalysator ist innerhalb des Tunnels 10 zu dessen hinterem Ende 16 geführt. Vor dem Motor 20 ist im Tunnel 10 ein Kühlaggregat 24 mit vom Motor angetriebenem Kühlergebläse montiert. Mit der Längsbelüftung des Tunnels 10 vom vorderen Ende 15 zum hinteren Ende 16 geht eine Zwangsströmung der Luft einher, welche eine intensive Kühlung aller Aggregate und die Belüftung des gesamten Tunnelraumes bewirkt. Zur Unterstützung der Längsdurchlüftung kann im Tunnel 10, beispielsweise im hinteren Bereich, zusätzlich ein Entlüftungsgebläse angeordnet sein (nicht dargestellt).

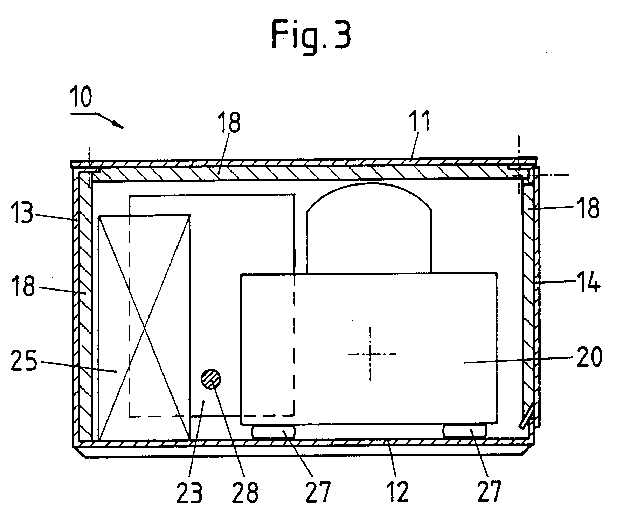

Wie insbesondere aus Fig. 3 hervorgeht, weist der selbsttragende Tunnel 10 einen Montagedeckel 11 sowie mindestens eine Servicetüre 14 auf, welche sich zweckmässigerweise seitlich neben dem Verbrennungsmotor 20 befindet. Der grösste Teil der Tunnelwandung, jedenfalls die Deckfläche 11 und die Seitenwände 13 (einschliesslich Servicetüre oder -türen 14) ist innen mit einer schalldämmenden Beschichtung 18 versehen; der Tunnelboden 12 kann dagegen frei bleiben oder nur teilweise, insbesondere in den Endbereichen des Tunnels, beschichtet sein. Ferner kann der Tunnel 10 auch an der Aussenseite eine schalldämmende Beschichtung aufweisen. Zweckmässigerweise ist mindestens der Verbrennungsmotor 20, event. auch das Getriebe 23, über schwingungsdämpfende Zwischenlagen 7 auf dem Tunnelboden 12 befestigt.

Mit dem beschriebenen Fahrzeug-Aufbau lässt sich eine ausserordentlich wirksame Geräuschdämpfung erreichen, da die Geräuschquellen sich vollständig im Innern des "geschlossenen" Tunnels 10 befinden, welcher keinerlei "Schallöcher" aufweist; ein Austritt von Schallwellen ist allenfalls an den Tunnelöffnungen 15 und 16 möglich, die jedoch von den Schallquellen relativ weit entfernt sind, so dass der Lärm auf dem Weg zu den Tunnelenden insbesondere durch die Beschichtung 18 sehr stark gedämpft wird. Nötigenfalls können im Querschnitt der Oeffnungen 15 und/oder 16 Jalousiegitter angeordnet werden, soweit sie die Längsdurchlüftung des Tunnels nicht zu sehr behindern.

Durch geeignete Anordnung der Aggregate innerhalb des Tunnels kann auch eine gute Gewichtsverteilung erreicht werden. Der selbsttragende Tunnel 10 kann zweckmässigerweise z.B. als Schweisskonstruktion aus Stahl oder Leichtmetall ausgeführt sein, nötigenfalls mit aussen oder im Innern angebrachten Verrippungen; der Tunnelquerschnitt kann auch z.B. trapezförmig, rund oder oval und/oder aus zwei oder mehreren Längsprofilen zusammengesetzt sein. Grundsätzlich, z.B. bei breiten Spezialfahrzeugen, kann der Tunnel auch quer zur Fahrzeug-Längsrichtung eingebaut sein; dabei muss natürlich das Fahrgestell in Verbindung mit dem Tunnel entsprechend ausgebildet sein, insbesondere ggf. hinsichtlich Gestaltung und Befestigung von auswechselbaren Achsträgern.

Nach dem beschriebenen Prinzip können natürlich nicht nur Nutzfahrzeuge verschiedenster Art, sondern auch Personenfahrzeuge, Omnibusse usw. gebaut werden.

## Patentansprüche

1. Zwei- oder mehrachsiges, mittels Verbrennungsmotor (20) angetriebenes Fahrzeug, mit einer schalldämmenden, belüfteten Umhüllung von Motor und Getriebe, dadurch gekennzeichnet, dass die genannte Umhüllung durch einen selbsttragenden, längsdurchlüfteten Tunnel (10) gebildet ist, welcher den Motor (20) und die Kraftübertragungsorgane (21-23, 28) aufnimmt und als Bestandteil des Fahrgestells eine lastaufnehmende Verbindung zwischen mindestens einer vorderen und einer hinteren Fahrzeugachse (4, 5) bildet, wobei der Tunnel (10) auf mindestens einem Teil (11, 13, 14) seiner Wandung eine schalldämmende Beschichtung (18) aufweist.

2. Fahrzeug nach Anspruch 1, dadurch gekennzeichnet, dass der Tunnel (10) einen Montagedeckel (11) und mindestens eine vorzugsweise seitlich angeordnete Servicetüre (14) aufweist.

3. Fahrzeug nach Anspruch 1, dadurch gekennzeichnet, dass die schalldämmende Beschichtung (18) innen an den Seitenwänden (13) und an der Deckfläche (11) des Tunnels (10) angebracht ist.

4. Fahrzeug nach Anspruch 3, dadurch gekennzeichnet, dass der Tunnel (10) zusätzlich an der Aussenfläche eine schalldämmende Beschichtung aufweist.

5. Fahrzeug nach Anspruch 1, dadurch gekennzeichnet, dass der Tunnel (10) im wesentlichen rechteckigen Querschnitt aufweist und in einem mittleren Bereich erweitert ist.

6. Fahrzeug nach Anspruch 1, dadurch gekennzeichnet, dass der Tunnel (10) mit auswelchselbaren Achsträgern (8, 9) lösbar verbunden ist.

7. Fahrzeug nach Anspruch 1, dadurch gekennzeichnet, dass der Tunnel (10) sich in Fahrzeug-Längsrichtung erstreckt und in seinen Endbereichen (15, 16) je mit auswechselbaren Achsträgern (8, 9) lösbar verbunden ist.

8. Fahrzeug nach Anspruch 1, dadurch gekennzeichnet, dass die Kraftübertragungsorgane eine vom Verbrennungsmotor (20) angetriebene hydrostatische Pumpe (21), einen von dieser betriebenen Hydraulikmotor (22), ein fernbetätigbares oder automatisches Getriebe (23) sowie mindestens eine vom Getriebe zu einer Vorder- und/oder einer Hinterachse (4, 5) führende Kardanwelle (28) umfassen.

9. Fahrzeug nach Anspruch 1, dadurch gekennzeichnet, dass mindestens der Verbrennungsmotor (20) über schwingungsdämpfende Zwischenlagen (27) auf dem Tunnelboden (12) befestigt ist.

10. Fahrzeug nach Anspruch 1, gekennzeichnet durch ein vor dem Verbrennungsmotor (20) im Tunnelquerschnitt angeordnetes Kühler-Gebläse-Aggregat (24).

11. Fahrzeug nach Anspruch 10, dadurch gekennzeichnet, dass der Tunnel (10) zusätzlich ein Entlüftungsgebläse enthält.

12. Fahrzeug nach Anspruch 1, dadurch gekennzeichnet, dass eine vom Verbrennungsmotor (20) ausgehende Auspuffanlage (29) innerhalb des Tunnels (10) zu dessen hinterem Ende (16) führt.

## Claims

1. Vehicle with two or more axles and powered by an internal combustion engine (20), wherein the engine and gearbox are contained in a sound-deadening, ventilated shrouding,
characterised in that said shrouding is constituted by a self-supporting tunnel (10) with lengthways through-ventilation, which tunnel houses the engine (20) and the power transmission units (21-23, 28) and as part of the chassis forms a load-bearing link between at least one front and one rear vehicle axle (4, 5), the tunnel (10) having a sound-deadening coating (18) on at least one part (11, 13, 14) of its wall.

2. Vehicle according to claim 1, characterised in that the tunnel (10) has a mounting cover (11) and at least one service door (14), preferably on the side.

3. Vehicle according to claim 1, characterised in that the sound-deadening coating (18) is applied internally on the side walls (13) and on the upper surface (11) of the tunnel (10).

4. Vehicle according to claim 3, characterised in that the tunnel (10) additionally has a sound-deadening coating on its external surface.

5. Vehicle according to claim 1, characterised in that the tunnel (10) is substantially rectangular in cross-section and broadens out in a central region.

6. Vehicle according to claim 1, characterised in that the tunnel (10) is connected to, but removable from, interchangeable axle brackets (8, 9).

7. Vehicle according to claim 1, characterised in that the tunnel (10) extends lengthways along the vehicle and in its end portions (15, 16) is connected to, but removable from, respective interchangeable axle brackets (8, 9).

8. Vehicle according to claim 1, characterised in that the power transmission units comprise a hydrostatic pump (21) powered by the internal combustion engine (20), a hydraulic motor (22) operated by said pump (21), a remotely controllable or automatic gearbox (23), and at least one drive shaft (28) running from the gearbox to a front axle and/or a rear axle (4, 5).

9. Vehicle according to claim 1, characterised in that at least the internal combustion engine (20) is fastened on the tunnel floor (12) by way of vibration-damping pads (27).

10. Vehicle according to claim 1, characterised by a radiator-fan assembly (24) arranged before the internal combustion engine (20) in the tunnel cross-section.

11. Vehicle according to claim 10, characterised in that the tunnel (10) additionally contains an air extractor fan.

12. Vehicle according to claim 1, characterised in that an exhaust system (29) runs inside the tunnel (10) from the internal combustion engine (20) to the back end (16) of said tunnel (10).

## Revendications

1. Véhicule à deux ou plusieurs essieux, entraîné par un moteur (20) à combustion interne, comprenant une enveloppe insonorisante, ventilée, du moteur et de la boîte de vitesses,
caractérisé en ce que cette enveloppe est constituée par un tunnel autoporteur (10) à ventilation longitudinale, qui reçoit le moteur (20) et les organes (21 à 23, 28) de transmission de forces et qui, en tant que composant intégrant du châssis, constitue une liaison porteuse des charges entre au moins un essieu avant et un essieu arrière (4, 5) du véhicule, le tunnel (10) présentant sur une partie au moins (11, 13, 14) de sa paroi un revêtement insonorisant (18).

2. Véhicule selon la revendication 1, caractérisé en ce que le tunnel (10) comporte un couvercle de montage (11) et au moins une trappe de visite (14) de préférence disposée latéralement.

3. Véhicule selon la revendication 1, caractérisé en ce que le revêtement insonorisant (18) est appliqué à l'intérieur du tunnel (10), sur les parois latérales (13) et sur la plaque de couverture ou couvercle (11) de celui-ci.

4. Véhicule selon la revendication 3, caractérisé en ce qu'en outre, la surface extérieure du tunnel (10) comporte un revêtement insonorisant.

5. Véhicule selon la revendication 1, caractérisé en ce que le tunnel (10) présente une section essentiellement rectangulaire et s'élargit au niveau d'une zone médiane.

6. Véhicule selon la revendication 1, caractérisé en ce que le tunnel (10) est relié de façon amovible à des supports d'essieux amovibles (8, 9).

7. Véhicule selon la revendication 1, caractérisé en ce que le tunnel (10) s'étend dans la direction longitudinale du véhicule, et est relié de façon démontable, par ses zones terminales (15, 16), respectivement à des supports d'essieux amovibles (8, 9).

8. Véhicule selon la revendication 1, caractérisé en ce que les organes de transmission de forces comportent une pompe hydrostatique (21) entraînée par le moteur (20) à combustion interne, un moteur hydraulique (22) mû par cette pompe, une boîte de vitesses télécommandée ou automatique (23) ainsi qu'au moins un arbre à cardans (28) s'étendant de la boîte de vitesses jusqu'à un essieu avant et/ou arrière (4, 5).

9. Véhicule selon la revendication 1, caractérisé en ce qu'au moins le moteur (20) à combustion interne est fixé sur le fond (12) du tunnel par l'intermédiaire d'éléments intercalaires (27) absorbant les vibrations.

10. Véhicule selon la revendication 1, caractérisé par un groupe radiateur-ventilateur (24), installé devant le moteur (20) à combustion interne dans la section transversale du tunnel.

11. Véhicule selon la revendication 10, caractérisé en ce que le tunnel comporte en outre un ventilateur d'extraction d'air.

12. Véhicule selon la revendication 1, caractérisé en ce qu'un système d'échappement (29) partant du moteur (20) à combustion interne mène à l'intérieur du tunnel (10) jusqu'à l'extrémité arrière (16) de celui-ci.
